# EUROPÄISCHE PATENTANMELDUNG

(11) **EP 4 442 482 A1**
(43) Veröffentlichungstag der Anmeldung: **09.10.2024**
(21) Anmeldenummer: 24164241.2
(22) Anmeldetag: 18.03.2024
(51) Int. Cl.: B60K 17/35, B60K 7/00, B60K 17/04, B60K 17/34

(54) **FAHRZEUGANTRIEBSSTRANG EINES FAHRZEUGS**

(30) Priorität: 05.04.2023 DE 102023108791
(71) Anmelder: HOERBIGER Antriebstechnik Holding GmbH, 86956 Schongau (DE)
(72) Erfinder: KÖLZER, Michael, 86956 Schongau (DE); SAUTER, Markus, 86956 Schongau (DE)
(74) Vertreter: Prinz & Partner mbB

(57) **Zusammenfassung**

Die Erfindung betrifft einen Fahrzeugantriebsstrang (12) eines Fahrzeugs (10) mit einem Motor (14), der dazu dient, zumindest ein Fahrzeugrad (16) anzutreiben, einer nur diesem angetriebenen Fahrzeugrad (16) zugeordneten Lamellenbremse (36) und einer nur diesem angetriebenen Fahrzeugrad (16) zugeordnete Kupplung (44; 44`), wobei die Kupplung (44; 44`) zwischen dem Motor (14) und dem Fahrzeugrad (16) angeordnet ist und im offenen Zustand sein zugeordnetes Fahrzeugrad (16) vom gesamten restlichen Fahrzeugantriebsstrang entkoppelt.

## Beschreibung

Die Erfindung betrifft einen Fahrzeugantriebsstrang eines Fahrzeugs.

Partikelemissionen von Fahrzeugbremsen treten bei Bremsvorgängen auf, bei denen typischerweise ein Bremsbelag mit Druck auf eine Bremsscheibe oder Bremstrommel beaufschlagt, wird, um eine Bremswirkung zu verursachen. Dabei findet ein Abrieb der Bremsbeläge statt, wobei hierdurch Partikelemissionen insbesondere Feinstaubemissionen verursacht werden.

Mikroplastikemissionen vom Reifen entstehen durch Reifenabrieb, welcher zu jeder Fahrsituation vorliegt. Bei Beschleunigungs- und Bremsvorgängen ist der Abrieb jedoch besonders hoch, da hierbei eine besonders hohe Kraftübertragung zwischen dem Fahrzeug und dem Fahrbahnbelag über den Fahrzeugreifen des Fahrzeugrads stattfindet.

Der Abrieb von Fahrzeugreifen und Bremsbelägen hat somit einen Verschleiß zur Folge. Je höher der Abrieb im Betrieb eines Fahrzeugs, desto eher muss ein Austausch der verschlissenen Teile erfolgen.

Folglich liegen bei Bremsvorgängen sowohl Emissionen durch die Bremse als auch durch die Fahrzeugreifen vor.

Ausgehend hiervon ist es die Aufgabe der Erfindung, einen Fahrzeugantriebsstrang eines Fahrzeugs bereitzustellen, wobei unter dem Begriff "Fahrzeugantriebsstrang" auch die Bremsen miteingeschlossen sein sollen, der in Bezug auf die Emissionen von Fahrzeugbremsen und Fahrzeugreifen einen emissionsarmen oder gar emissionsfreien Betrieb des Fahrzeugs erlaubt, insbesondere bei Bremsvorgängen. Damit einhergehend soll auch der Verschleiß von Bremsen und Reifen minimiert werden, sodass sich der Wartungsaufwand des Fahrzeugs reduziert.

Die gestellte Aufgabe wird erfindungsgemäß gelöst durch einen Fahrzeugantriebsstrang eines Fahrzeugs mit einem Motor, der dazu dient, zumindest ein Fahrzeugrad anzutreiben, einer nur diesem angetriebenen Fahrzeugrad zugeordneten Lamellenbremse und einer nur diesem angetriebenen Fahrzeugrad zugeordnete Kupplung, wobei die Kupplung zwischen dem Motor und dem Fahrzeugrad angeordnet ist und im offenen Zustand sein zugeordnetes Fahrzeugrad vom gesamten restlichen Fahrzeugantriebsstrang entkoppelt.

Der Grundgedanke der Erfindung ist es, die auf das angetriebene Fahrzeugrad wirkenden rotierende Massen, welche auf das Fahrzeugrad durch den restlichen Fahrzeugantriebsstrang wirken, einerseits im Fahrbetrieb, insbesondere bei einem Segeln, zu verringern, sodass die mitgeschleppten rotierenden Massen reduziert werden. Anderseits sollen die durch den restlichen Fahrzeugantriebsstrang auf das angetriebene Fahrzeugrad wirkenden rotierende Massen im Falle eines Bremsvorgangs durch ein Öffnen der Kupplung verringert werden, sodass das am Fahrzeugrad herrschende Trägheitsmoment während eines Bremsvorgangs bei geöffneter Kupplung geringer ist, als wenn die Kupplung geschlossen wäre, oder keine Kupplung vorgesehen wäre.

Hierdurch wird erreicht, dass während eines Bremsvorgangs die benötigte Bremskraft bei geöffneter Kupplung geringer ist als bei einer geschlossenen Kupplung, da bei einer geöffneten Kupplung die Bremskraft lediglich zur Verzögerung des Fahrzeugs benötigt wird und zusätzlich nur zur Verzögerung der rotierenden Massen des Fahrzeugantriebsstrangs, die sich zwischen der Kupplung und dem Fahrzeugrad inklusive des Fahrzeugrads selbst befinden.

So wird bei einem Bremsvorgang und bei einer im offenen Zustand befindlichen Kupplung eine niedrigere Bremskraft benötigt, um das Fahrzeug abzubremsen, als wenn die Kupplung geschlossen wäre.

Es findet also während eines Bremsvorgangs eine Reduktion des auf das Fahrzeugrad wirkenden Trägheitsmoments statt, welches durch den abgekoppelten Teil des Fahrzeugantriebsstrangs üblicherweise anliegen würde.

Durch die niedrigere benötigte Bremskraft kann auch ein verringerter Abrieb an der Lamellenbremse realisiert werden, sodass sich die Emission von Feinstaubpartikeln während des Bremsvorgangs verringern.

Darüber hinaus werden die (Feinstaub-)Emissionen durch die Bremse zusätzlich durch den Einsatz der Lamellenbremse an sich verringert, da diese bei gleicher Bremskraft weniger Emissionen verursacht als herkömmliche Scheiben-oder Trommelbremsen.

Insgesamt können also durch die Lamellenbremse in Verbindung, mit der dem einen angetriebenen Fahrzeugrad zugeordneten Kupplung besonders emissionsarme Bremsvorgänge erfolgen.

Die Lamellenbremse hat auch einen erheblichen Aerodynamikvorteil gegenüber den jetzigen, luftgekühlten Scheiben- oder Trommelbremsen, denn sie können außen gekapselt sein und auch in Öl laufen, was zu einer effektiven hydraulischen Kühlung führt. Der erfindungsgemäße Fahrzeugantriebsstrang besitzt vorzugsweise solche gekapselte und/oder in Öl laufende Lamellenbremse.

Damit kann auch die Felge außenseitig geschlossen sein, was zusätzliche aerodynamische Vorteile hat.

Vorzugsweise ist für jede angetriebene Fahrzeugachse nur eine einzige, nur dieser Fahrzeugachse zugeordnete Kupplung vorgesehen. Sind insgesamt beide Fahrzeugachsen angetrieben, hat jede Fahrzeugachse ihre eigene, singuläre Kupplung. Die Kupplung sollte so in den Antriebsstrang eingebunden sein, dass mit nur einer Kupplung die beiden angetriebenen Fahrzeugräder derselben Fahrzeugachse vom restlichen Fahrzeugantriebsstrang entkoppelt werden.

Wenn mehrere Antriebsachsen angetrieben sind, kann die Konzeption, wie mit nur einer Kupplung beide Räder derselben Antriebsachse vom Antrieb entkoppelt werden, auch unterschiedlich sein. Nachfolgend werden verschiedene dieser Konzepte vorgestellt.

Ein Aspekt sieht vor, dass das Fahrzeugrad zusammen mit der Lamellenbremse und mit dem Teil des Fahrzeugantriebsstrangs, der sich zwischen Fahrzeugrad und Kupplung befindet, bei geöffneter Kupplung vom gesamten restlichen Fahrzeugantriebsstrang entkoppelt ist.

Dies ermöglicht es also auch bei geöffneter Kupplung, das Fahrzeugrad weiterhin über die Lamellenbremse abzubremsen, und stellt dennoch sicher, dass bei einem Bremsvorgang nur die Trägheitsmomente der rotierenden Massen zwischen Fahrzeugrad und Kupplung wirken inklusive dem Fahrzeugrad selbst und einem Teil der Kupplung und nicht die des gesamten Fahrzeugantriebsstrangs.

Bevorzugt kann die Kupplung zwischen einem nur diesem Fahrzeugrad oder nur einem einer Fahrzeugachse zugeordneten Getriebe in der Lamellenbremse angeordnet sein.

Dies erlaubt es also entsprechend der obigen Erläuterungen, das Fahrzeugrad auch bei geöffneter Kupplung mittels der Lamellenbremse abzubremsen und gleichzeitig vom Getriebe zu entkoppeln, sodass das durch die rotierenden Massen vorliegende Trägheitsmoment des Getriebes bei einem Bremsvorgang nicht auf das Fahrzeugrad wirkt.

Alternativ kann die Kupplung unmittelbar zwischen Fahrzeugrad und der Lamellenbremse angeordnet sein.

Hierdurch findet eine maximale Reduktion der rotierenden Massen am Fahrzeugrad statt, da dieses vom gesamten restlichen Fahrzeugstrang abgekoppelt werden kann, inklusive der Lamellenbremse.

So kann das Rad sich beispielsweise im Segelbetrieb des Fahrzeugs frei drehen, ohne dass dabei beispielsweise eine unerwünschte Bremskraft durch ein Schleifen der Bremse auf das Fahrzeugrad wirkt. Soll jedoch das Fahrzeug über das angetriebene Fahrzeugrad beschleunigt oder verzögert werden, so muss ein sofortiges Schließen der Kupplung erfolgen, sodass Brems- oder Antriebskräfte auf das angetriebene Fahrzeugrad übertragbar sind. Somit wirken bei dieser Variante während eines Bremsvorgangs die durch den Fahrzeugantriebsstrang vorliegenden Trägheitsmomente am Fahrzeugrad.

Darüber hinaus ist es auch denkbar, dass die Kupplung unmittelbar zwischen dem Motor und der Lamellenbremse ohne Zwischenschaltung eines Getriebes angeordnet ist.

Bei dieser Ausführung könnte der Motor beispielsweise über eine Antriebswelle das Fahrzeugrad bei geschlossener Kupplung antreiben und, wenn die Kupplung geöffnet wird, von dem Fahrzeugrad mitsamt der Lamellenbremse getrennt werden, sodass auch ein Verzögern des Fahrzeugrads bei geöffneter Kupplung möglich ist.

Bei einem Elektromotor ist zu beachten, dass bei einer Verzögerung nur durch Rekuperation für den Fall, dass die Batterie voll geladen ist, ein Nebenabnehmer für elektrische Leistung vorhanden sein muss, um die entstehende elektrische Leistung abzuführen.

Alternativ wäre es auch denkbar, dass der Motor als Radnabenantrieb vorliegt, sodass eine Bremskraft über die Lamellenbremse auf das Fahrzeugrad nur bei geschlossener Kupplung möglich ist und das Trägheitsmoment des Motors während eines Bremsvorgangs auf das Fahrzeugrad wirken würde.

Weiter kann die Kupplung zwischen dem Getriebe und einer Kardanwelle vorgesehen sein. Bei dieser Anordnung hat das Öffnen der Kupplung zur Folge, dass eine gesamte Fahrzeugachse mit dem Getriebe vom restlichen Fahrzeugantriebsstrang abgekoppelt wird.

Darüber hinaus ist es möglich, dass die Kupplung zwischen dem Getriebe und einer Antriebswelle des angetriebenen Fahrzeugrads vorgesehen ist. So kann die Kupplung am Getriebeausgang hin zur Antriebswelle vorgesehen sein, was eine besonders einfache Integration dieser ermöglicht.

Alternativ dazu kann die Kupplung auch in dem Getriebe vorgesehen sein. Auch dies ermöglicht eine einfache und platzsparende Unterbringung der Kupplung.

Ferner ist es auch denkbar, dass die Kupplung an einer Antriebswelle des angetriebenen Fahrzeugrads vorgesehen ist. Dies hat den Vorteil, dass ein Teil, der durch die rotierenden Massen entstehenden Trägheitsmomente des Fahrzeugantriebsstrangs bei geöffneter Kupplung von dem Fahrzeugrad zusammen mit der Lamellenbremse und einem Teil der Antriebswelle abgekoppelt werden kann.

Weiter kann die Kupplung auch in einer Radnabe des angetriebenen Fahrzeugrads vorgesehen sein. Dies ermöglicht eine platzsparende Unterbringung und hat zudem den Vorteil, dass ein Teil der rotierenden Masse des Fahrzeugantriebsstrangs bei einem Bremsvorgang bei geöffneter Kupplung nicht mehr auf das angetriebene Fahrzeugrad wirkt.

Bevorzugt ist die Kupplung am oder im Getriebe vorgesehen und das Fahrzeugrad mit der Lamellenbremse und dem Teil des Fahrzeugantriebsstrangs vom Fahrzeugrad bis zum Getriebe oder einem Teil des Getriebes bei geöffneter Kupplung vom gesamten restlichen Fahrzeugantriebsstrang entkoppelt, wobei das Getriebe insbesondere ein Verteilergetriebe und/oder ein Differenzialgetriebe ist.

So können beispielsweise zwei angetriebene Fahrzeugräder einer Fahrzeugachse mittels einer einzelnen Kupplung vom restlichen Fahrzeugantriebsstrang entkoppelt werden. Dies kann beispielsweise erfolgen, indem die Kupplung am Verteilergetriebeausgang oder am Differenzialgetriebeeingang positioniert wird.

Weiter kann die Kupplung auch am Differenzialausgang, also bei der Differenzialabtriebswelle hin zu einem angetriebenen Fahrzeugrad positioniert werden, sodass ein Öffnen ein direktes Abkuppeln des einen angetriebenen Fahrzeugrads zur Folge hat.

Vorteilhafterweise ist das Fahrzeugrad einer Fahrzeugachse zugeordnet, die ein Differenzial- sowie ein zweites angetriebenes Fahrzeugrad mit einer zweiten, nur dem zweiten Fahrzeugrad zugeordneten Lamellenbremse umfasst und bei geöffneter Kupplung das Differenzial durchdreht und eine Kraftübertragung zwischen dem Motor und dem zweiten Fahrzeugrad stattfinden kann.

So können mit nur einer Kupplung zwei angetriebene Fahrzeugräder vom restlichen Fahrzeugantriebsstrang entkoppelt werden.

Die Kupplung kann eine Rutsch- und/oder eine formschlüssige Kupplung sein.

Vorteilhafterweise ist die Kupplung eine formschlüssige Kupplung, wobei in die formschlüssige Kupplung eine Rutschkupplung integriert ist, die bei Überschreitung eines definierten Drehmoments durchrutscht.

Die Rutschkupplung fungiert somit als Überbelastungsschutz. Dies ist beispielsweise bei hochdynamischen Vorgängen der Fall, wie bei einem Beschleunigen des Fahrzeugs, bei dem hohe Drehmomente wirken, das maximale übertragbare Drehmoment begrenzt werden, um Kraftspitzen im Fahrzeugantriebsstrang, die zu eventuellen Schäden oder einen übermäßigen Verschleiß führen könnte, zu verhindern.

Zudem kann die Rutschkupplung das maximale übertragbare Drehmoment auch dann begrenzen, wenn Drehmomente im Antriebsstrang wirken, die durch sich veränderte Traktionsverhältnisse aufgrund sich plötzlich verändernde Reibwerte (z.B. Eis auf trockener Straße) während des aktiven Antriebs verursacht werden.

Weiter kann der Kupplung ein Aktuator zugeordnet sein, der zum Öffnen und/oder Schließen der Kupplung dient und der die Kupplung hydraulisch, pneumatisch, elektromechanisch oder elektromagnetisch betätigt.

Eine hydraulische Betätigung erlaubt dabei besonders hohe Schaltkräfte des Aktuators. Eine pneumatische Betätigung bietet sich insbesondere dann an, wenn das Fahrzeug ohnehin mit einem Druckluftsystem versehen ist oder einem Unterdrucksystem. Durch eine elektromechanische Betätigung kann eine besonders präzise Verstellung der Kupplung erfolgen. Eine elektromagnetische Betätigung erlaubt ein besonders schnelles Öffnen und Schließen der Kupplung.

Vorteilhafterweise ist eine Steuerung vorgesehen, die dazu eingerichtet ist, den Aktuator anzusteuern und in Abhängigkeit vom Fahrzustand des Fahrzeugs den Aktuator steuert, um ein automatisches Öffnen und Schließen der Kupplung zu veranlassen. Es muss also keine manuelle Umschaltung der Kupplung erfolgen. Vielmehr orientiert sich die Steuerung daran, in welchem Fahrzustand sich das Fahrzeug befindet. Fahrzustände können beispielsweise Bremsvorgänge, Beschleunigungsvorgänge und/oder ein Segeln des Fahrzeugs sein.

Bevorzugt ist die Steuerung so programmiert, dass sie bei einem Bremsvorgang, insbesondere bei einem Bremsvorgang, bei dem nicht rekuperiert wird, ein Öffnen der Kupplung veranlasst. Weiter kann die Steuerung so programmiert sein, dass ein Öffnen der Kupplung auch dann veranlasst wird, wenn das Fahrzeug segelt.

Entsprechend der obigen Erläuterungen erlaubt das Abkuppeln des Fahrzeugrads vom gesamten restlichen Fahrzeugantriebsstrang bei einem Bremsvorgang, bei dem nicht rekuperiert wird, nur niedrigere Bremskräfte aufbringen zu müssen und so die Emissionen durch die Lamellenbremse zu verringern.

Wird während des Bremsvorgangs ohnehin rekuperiert, sodass die eigentliche Bremskraft durch einen elektrischen Motor aufgebracht wird, so ist kein Abkuppeln des angetriebenen Fahrzeugrads notwendig. Die Bremskraft wird beim Rekuperieren allein oder praktisch allein durch den Elektromotor im Generatorbetrieb aufgebracht, sodass die Lamellenbremse, wenn überhaupt nur geringfügig betätigt wird und die dabei entstehenden Emissionen vernachlässigbar gering ausfallen.

Segelt das Fahrzeug, so kann das angetriebene Fahrzeugrad abgekoppelt werden, sodass kein Widerstand, der beispielsweise durch Reibung im Fahrzeugantriebsstrang entsteht, auf das Antriebsrad des Fahrzeugs beim Segeln wirkt und dieses unerwünscht abbremst.

Bevorzugt kann die Lamellenbremse ein gekapseltes Lamellenbremsengehäuse sowie Innenlamellen und Außenlamellen aufweisen, die in gekapselten Lamellenbremsengehäusen aufgenommen sind.

Die eigentliche Bremskraft einer Lamellenbremse wird dabei durch Beaufschlagung der Innen- und Außenlamellen aufeinander erzeugt, wodurch Reibung und damit entsprechend der obigen Erläuterungen Abrieb entsteht. Dadurch, dass die Innen- und Außenlamellen in dem gekapselten Lamellenbremsgehäuse aufgenommen sind, wird dieser Abrieb innerhalb des Lamellenbremsengehäuses gesammelt und es finden keinerlei Emissionen an die Umgebung statt. Durch diesen Aufbau können in Bezug auf die Bremse emissionsfreie Bremsvorgänge realisiert werden.

Die Erfindung wird nachfolgend anhand einer Ausführungsform beschrieben, die in den beigefügten Zeichnungen dargestellt ist. In diesen zeigen:
- Figur 1 eine schematische Darstellung eines mit einem erfindungsgemäßen Fahrzeugantriebsstrang ausgestatteten Fahrzeugs in der Draufsicht gemäß einer ersten Option;
- Figur 2a eine schematische Darstellung eines erfindungsgemäßen Fahrzeugantriebsstrangs gemäß der ersten Option mit einer Kupplung im geöffneten Zustand;
- Figur 2b eine schematische Darstellung des erfindungsgemäßen Fahrzeugantriebsstrangs gemäß der ersten Option mit der Kupplung im geschlossenen Zustand;
- Figur 3 eine schematische Darstellung des mit einem erfindungsgemäßen Fahrzeugantriebsstrang ausgestatteten Fahrzeugs in der Draufsicht gemäß einer zweiten Option;
- Figur 4a eine schematische Darstellung eines erfindungsgemäßen Fahrzeugantriebsstrangs gemäß der zweiten Option mit einer Kupplung im geöffneten Zustand;
- Figur 4b eine schematische Darstellung des erfindungsgemäßen Fahrzeugantriebsstrangs gemäß der zweiten Option mit der Kupplung im geschlossenen Zustand;
- Figur 5 eine schematische Darstellung eines mit einem erfindungsgemäßen Fahrzeugantriebsstrang ausgestatteten Fahrzeugs in der Draufsicht gemäß einer dritten Option;
- Figur 6a eine schematische Darstellung des erfindungsgemäßen Fahrzeugantriebsstrangs gemäß der dritten Option mit einer Kupplung im geöffneten Zustand;
- Figur 6b eine schematische Darstellung des erfindungsgemäßen Fahrzeugantriebsstrangs gemäß der dritten Option mit der Kupplung im geschlossenen Zustand;
- Figur 7 eine schematische Darstellung eines mit einem erfindungsgemäßen Fahrzeugantriebsstrang ausgestatteten Fahrzeugs in der Draufsicht gemäß einer vierten Option;
- Figur 8a eine schematische Darstellung des erfindungsgemäßen Fahrzeugantriebsstrangs gemäß der vierten Option mit einer Kupplung im geöffneten Zustand; und
- Figur 8b eine schematische Darstellung des erfindungsgemäßen Fahrzeugantriebsstrangs gemäß der vierten Option mit der Kupplung im geschlossenen Zustand.

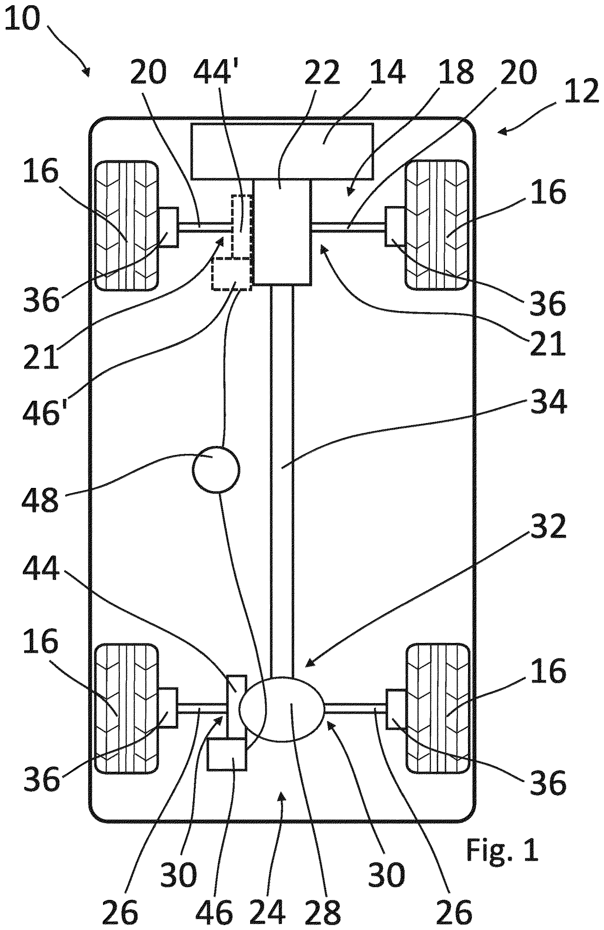

Figur 1 zeigt ein Fahrzeug 10 mit einem Fahrzeugantriebsstrang 12 gemäß einer ersten Option.

Der Fahrzeugantriebsstrang 12 umfasst dabei zumindest einen Motor 14, der dazu dient, ein Fahrzeugrad 16 anzutreiben. Entsprechend Figur 1 können auch alle vier Fahrzeugräder 16 durch den Motor angetrieben werden. Der Motor kann ein Elektromotor, ein Verbrennungsmotor oder ein hybrider Antriebsmotor sein.

Dabei weist der Fahrzeugantriebsstrang 12 eine Vorderachse 18 auf, deren angetriebene Fahrzeugräder 16 über Antriebswellen 20, die mit Getriebeausgängen 21 eines am Motor 14 angeordneten Getriebes 22 verbunden sind, mit dem Motor 14 gekoppelt sind.

Zudem umfasst der Fahrzeugantriebsstrang 12 entsprechend Figur 1 eine Hinterachse 24, deren angetriebene Fahrzeugräder 16 über Antriebswellen 26 mit einem als Differenzial ausgebildeten Getriebe 28 gekoppelt sind, wobei Antriebswellen 26 an Getriebeausgänge 30 des Getriebes 28 angebunden sind.

Das Getriebe 28 weist weiter einen Getriebeeingang 32 auf, der wiederum über eine Kardanwelle 34 mit dem am Motor angeordneten Getriebe 22 gekoppelt ist.

Figur 1 zeigt dabei nur eine mögliche Ausgestaltung. Grundsätzlich ist es auch denkbar, dass lediglich die Vorderachse 18 oder lediglich die Hinterachse 24 vom Motor 14 angetriebene Fahrzeugräder 16 umfasst. Folglich sind je nach Ausgestaltung die einen oder anderen Komponenten des zuvor erläuterten Fahrzeugantriebsstrangs 12 nicht zwingend notwendig.

Darüber hinaus umfasst der Fahrzeugantriebsstrang 12 Lamellenbremsen 36, die jeweils nur einem einzelnen angetriebenen Fahrzeugrad 16 zugeordnet sind.

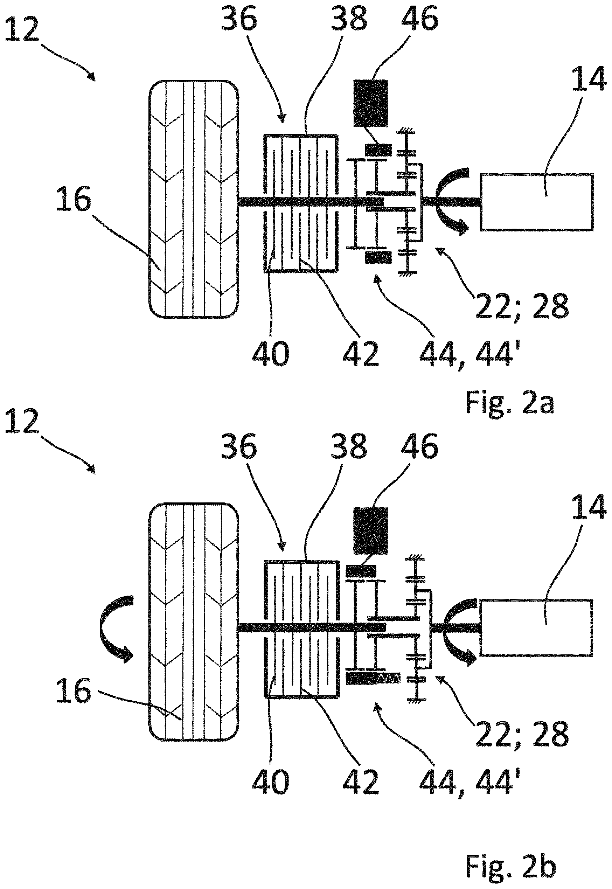

Die Lamellenbremsen 36 weisen jeweils ein Lamellenbremsengehäuse 38 auf sowie Innenlamellen 40 und Außenlamellen 42. Die Innenlamellen 40 und die Außenlamellen 42 sind dabei in dem gekapselten Lamellenbremsengehäuse 38 aufgenommen (siehe Figur 2). Weiter kann jede Lamellenbremse 36 hydraulisch, pneumatisch, elektromechanisch oder elektromagnetisch betätigt werden, um eine Bremskraft hervorzurufen.

Die Lamellenbremsen 36 sind beispielsweise ölgekühlt.

Durch das gekapselte Lamellenbremsengehäuse 38 verbleibt Abrieb insbesondere Abrieb in Form von Partikeln und Feinstaub der Innenlamellen 40 und/oder der Außenlamellen 42 bei einem Betätigen der Lamellenbremse 36 innerhalb des Lamellenbremsengehäuses 38.

Darüber hinaus umfasst der Fahrzeugantriebsstrang 12 zumindest eine Kupplung 44, die jeweils nur einem einzelnen angetriebenen Fahrzeugrad 16 zugeordnet ist.

Bei der Kupplung 44 kann es sich dabei um eine reibschlüssige und/oder um eine formschlüssige Kupplung handeln.

Ist die Kupplung 44 als formschlüssige Kupplung ausgebildet, so ist es denkbar, dass in die formschlüssige Kupplung eine Rutschkupplung integriert ist (in den Figuren nicht gezeigt), die bei Überschreitung eines definierten Drehmoments durchrutscht, um Lastspitzen im Fahrzeugantriebsstrang 12 zu verhindern.

Zum Öffnen und Schließen der Kupplung 44 ist ein Aktuator 46 vorgesehen (siehe insbesondere Figuren 2a, 2b). Die Betätigung der Kupplung 44 über den Aktuator 46 kann hydraulisch, pneumatisch, elektromechanisch oder auch elektromagnetisch erfolgen.

Darüber hinaus ist eine Steuerung 48 vorgesehen, die mit dem Aktuator 46 bzw. 46' gekoppelt und dazu eingerichtet ist, den Aktuator 46 anzusteuern. Die Ansteuerung erfolgt dabei in Abhängigkeit des Fahrzustands des Fahrzeugs, um mittels des Aktuators 46 ein automatisches Öffnen und Schließen der Kupplung 44, 44` zu veranlassen.

In Figur 1 ist diese Kupplung 44 dem angetriebenen linken Fahrzeugrad 16 der Hinterachse 24 zugeordnet. Sie ist dabei zwischen dem Motor 14 und dem betreffenden angetriebenen Fahrzeugrad 16 angeordnet, sodass die Kupplung 44 in geöffnetem Zustand das zugeordnete angetriebene Fahrzeugrad 16 vom gesamten restlichen Fahrzeugantriebsstrang 16 entkoppelt.

Alternativ oder zusätzlich dazu können auch jedem oder nur einzelnen der anderen angetriebenen Fahrzeugräder 16 solche Kupplungen 44 zugeordnet sein.

Um dies zu verdeutlichen, ist in Figur 1 eine weitere Kupplung 44` durch die gestrichelte Linie angedeutet, welche beispielhaft dem angetriebenen linken Fahrzeugrad 16 der Vorderachse 18 zugeordnet ist.

Die Zwischenschaltung der Kupplung 44 bzw. 44` ist schematisch in den Figuren 2a und 2b gezeigt.

Figur 2a zeigt dabei die Kupplung 44 bzw. 44` im geöffneten Zustand. Hieraus geht hervor, dass ein Öffnen der Kupplung 44 bzw. 44' zur Folge hat, dass das angetriebene Fahrzeugrad 16 gemeinsam mit der Lamellenbremse 36 und dem abtriebsseitigen Teil der Kupplung 44 selbst vom gesamten restlichen Fahrzeugantriebsstrang, sprich insbesondere dem/den Getrieben, welches/-e hier das am Motor angeordnete Getriebe 22 oder/oder das Getriebe 28 sein kann, sowie den weiteren Komponenten des Fahrzeugantriebsstrangs 12 einschließlich des Motors 14 abgekoppelt ist.

Ein Schließen der Kupplung 44 entsprechend Figur 2b hat wiederum zur Folge, dass das angetriebene Fahrzeugrad 16 und die Lamellenbremse 36 mit dem restlichen Teil des Fahrzeugantriebsstrangs gekoppelt sind. Dies wird durch den zusätzlichen Pfeil am angetriebenen Fahrzeugrad 16 in Figur 2b angedeutet.

Gemäß der ersten Option ist die Kupplung 44 bzw. 44' also allgemein formuliert zwischen einem nur dem angetriebenen Fahrzeugrad 16 und einem einer Fahrzeugachse 18, 24 zugeordneten Getriebe, was in diesem Fall das am Motor 14 angeordnete Getriebe 22 oder 28 sein kann, und einer am Fahrzeugrad 16 angeordneten Lamellenbremse 36 angeordnet.

Die genaue Positionierung der Kupplung 44 bzw. 44` kann dabei unterschiedlich gewählt werden.

So ist es denkbar, die Kupplung 44 bzw. 44` zwischen dem Getriebe 28 und der Antriebswelle 26 beziehungsweise zwischen dem am Motor 14 angeordneten Getriebe 22 und der Antriebswelle 20 des jeweiligen angetriebenen Fahrzeugrads 16 vorzusehen.

Die Kupplung 44 bzw. 44' selbst kann dabei direkt am jeweiligen Getriebeausgang 21 bzw. 30 außen am jeweiligen Getriebe 22 bzw. 28 vorgesehen sein oder in dem Getriebe 22 bzw. 28, also dem Gehäuse, vorgesehen sein. Somit ist das jeweilige angetriebene Fahrzeugrad bei geöffneter Kupplung 44 bzw. 44' mit dem Teil des Fahrzeugantriebsstrangs vom Fahrzeugrad selbst bis zum Getriebe 22 bzw. 28 vom gesamten restlichen Fahrzeugantriebsstrang entkoppelt.

Alternativ ist es auch denkbar, dass die Kupplung an der Antriebswelle 20 bzw. 26 des jeweiligen angetriebenen Fahrzeugrads 16 vorgesehen ist.

Darüber hinaus ist es auch denkbar, die Kupplung 44 bzw. 44' in der Radnabe des jeweiligen angetriebenen Fahrzeugrads 16 vorzusehen (in Figur 1 nicht gezeigt), sodass bei geöffneter Kupplung 44 bzw. 44' das Fahrzeugrad 16 gemeinsam mit der Lamellenbremse 36 schon ab der Antriebswelle 20 bzw. 26 vom restlichen Fahrzeugantriebsstrang entkoppelt ist.

Wird ein Aufbau entsprechend Figur 1 gewählt, bei dem an der Vorderachse 18 und/oder an der Hinterachse 24 jeweils nur eine einzelne Kupplung 44 bzw. 44' angeordnet ist und die Antriebswellen 20 bzw. die Antriebswellen 26 an die Getriebeausgänge 21 bzw. 30 eines als Differenzial ausgebildeten Getriebes angebunden sind, so ist es möglich, dass das angetriebene Fahrzeugrad 16 bei geöffneter Kupplung 44 bzw. 44' vom gesamten restlichen Fahrzeugantriebsstrang entkoppelt ist und das als Differenzial ausgebildete Getriebe 22 bzw. 28 durchdreht und keinerlei Kraftübertragung zwischen dem Motor 14 und dem jeweiligen zweiten Fahrzeugrad 16 an der Vorderachse 18 und/oder an der Hinterachse 24 stattfinden kann.

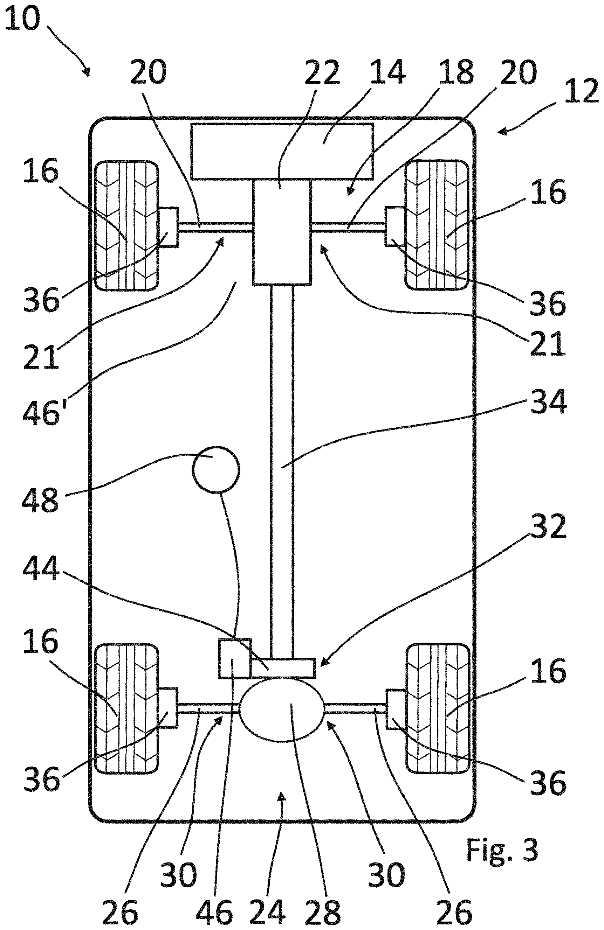

In den Figuren 3 bis 4b ist ein Fahrzeugantriebsstrang 12 gemäß einer zweiten Option gezeigt. Im Unterschied zu der vorherigen Option ist bei der zweiten Option die Kupplung 44 zwischen dem Getriebe 28 und der Kardanwelle 34 positioniert. Die zuvor erfolgten Erläuterungen zur ersten Option lassen sich im Allgemeinen analog auf die zweite Option anwenden.

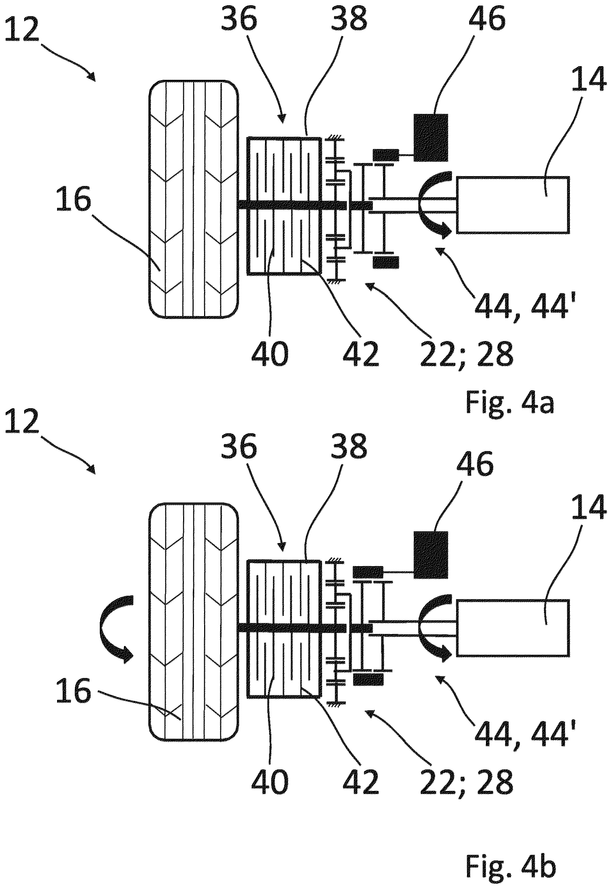

Entsprechend wäre, wie auch in Figur 4a gezeigt, bei geöffneter Kupplung 44 das Fahrzeugrad 16 mit der Lamellenbremse 36 und dem Teil des Fahrzeugantriebsstrangs 12 vom Fahrzeugrad 16 bis zum Getriebe 28 oder bis zu zumindest einem Teil des Getriebes 28 bei geöffneter Kupplung vom restlichen Fahrzeugantriebsstrang entkoppelt.

Die Entkopplung der angetriebenen Fahrzeugräder 16 an der Hinterachse 24 voneinander, erfolgt dabei durch das als Differenzial ausgebildete Getriebe 28, welches bei einem relativen Drehzahlunterschied der angetriebenen Fahrzeugräder 16 durchdreht.

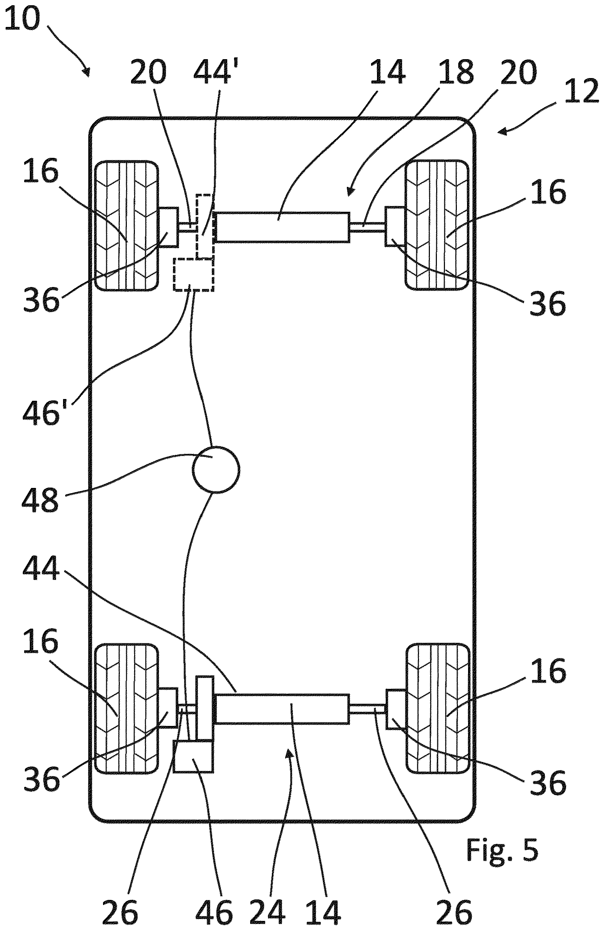

In den Figuren 5 bis 6b ist ein Fahrzeugantriebsstrang 12 gemäß einer dritten Option gezeigt. Hier weist sowohl die Vorderachse 18 als auch die Hinterachse 24 jeweils einen Motor 14 und damit auch angetriebene Fahrzeugräder 16 auf. Es ist jedoch auch denkbar, dass nur eine der Fahrzeugachsen 18, 24 angetriebene Fahrzeugräder 16 umfasst. Wie bereits zu Option 2 erwähnt, lassen sich die zuvor erfolgten Erläuterungen zur ersten Option im Allgemeinen analog auf die zweite Option anwenden.

Bei dieser dritten Option ist die Kupplung 44 bzw. 44' unmittelbar zwischen dem Motor 14 und der Lamellenbremse 36 des jeweiligen angetriebenen Fahrzeugrads 16 ohne Zwischenschaltung eines Getriebes angeordnet.

In Figur 5 ist dabei jeweils an der Vorderachse 18 und an der Hinterachse 24 nur eine Kupplung angeordnet, die jeweils nur einem angetriebenen Fahrzeugrad 16 der Fahrzeugachsen 18, 24 zugeordnet ist.

Es ist jedoch auch möglich, dass beiden angetriebenen Fahrzeugrädern 16 der Vorderachse 18 bzw. Hinterachse 24 jeweils eine Kupplung 44 bzw. 44` zugeordnet ist.

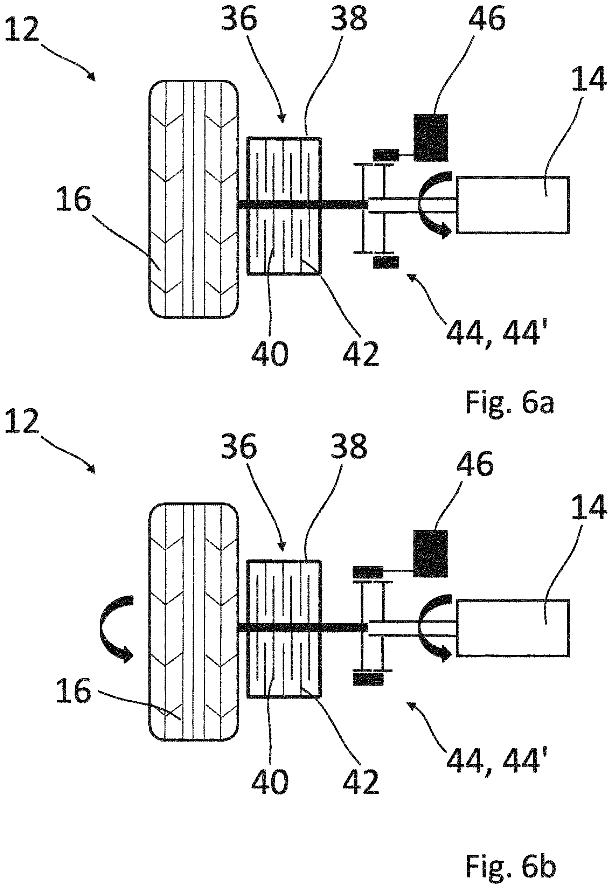

Entsprechend Figur 6a ist das angetriebene Fahrzeugrad 16 bei geöffneter Kupplung 44 gemeinsam mit der zugeordneten Lamellenbremse 36 und einem Teil der Kupplung 44 selbst vom gesamten restlichen Fahrzeugantriebsstrang, welcher insbesondere aus Antriebswellen 20 bzw. 26 und dem Motor 14 besteht, abgekoppelt.

Nachfolgend soll der Betrieb der Kupplung 44 und/oder 44' der ersten bis dritten Optionen erläutert werden.

Entsprechend den obigen Erläuterungen ist die Steuerung 48 dazu vorgesehen, den Aktuator 46 auf Basis des Fahrzustands anzusteuern und ein automatisches Öffnen und Schließen der Kupplung 44 und/oder 44` zu veranlassen.

Hierfür ist die Steuerung 48 so programmiert, dass sie bei einem Bremsvorgang ein Öffnen der Kupplung 44 und/oder 44` veranlasst, sodass das jeweilige angetriebene Fahrzeugrad 16, dem die Kupplung 44 und/oder 44' zugeordnet ist, mit der Lamellenbremse 36 und dem Teil des Fahrzeugantriebsstrangs vom jeweiligen angetriebenen Fahrzeugrad 16 bis zur geöffneten Kupplung vom gesamten restlichen Fahrzeugantriebsstrang entkoppelt ist. Dies hat zur Folge, dass die durch die rotierenden Massen wirkenden Trägheitsmomente nicht während des Bremsvorgangs wirken, sodass die Bremskraft, welche durch die Lamellenbremse 36 aufgebracht werden muss, geringer ausfallen kann, als wenn die Kupplung 44 und/oder 44' geschlossen wäre.

Findet während des Bremsvorgangs beispielsweise bei elektrischen Fahrzeugen ein Rekuperieren statt oder wird bei einem Fahrzeug mit Verbrennungsmotor der Motor als Motorbremse eingesetzt, so ist es auch denkbar, dass die Steuerung 48 die Kupplung 44 und/oder 44` nicht öffnet, solange ein Rekuperieren bzw. ein Bremsen durch den Motor stattfindet.

Darüber hinaus kann die Steuerung 48 zudem auch so programmiert sein, dass sie bei einem Segeln des Fahrzeugs 10 ein Öffnen der Kupplung 44 und/oder 44` veranlasst, sodass eventuelle Verluste, beispielsweise durch Reibung im Fahrzeugantriebsstrang 12 nicht auf das jeweilige angetriebene Fahrzeugrad 16 wirken.

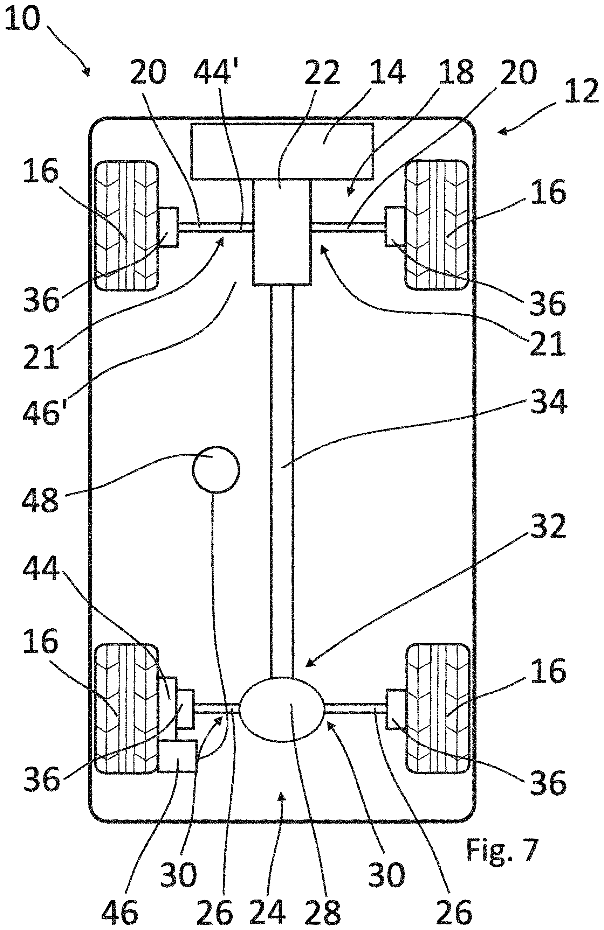

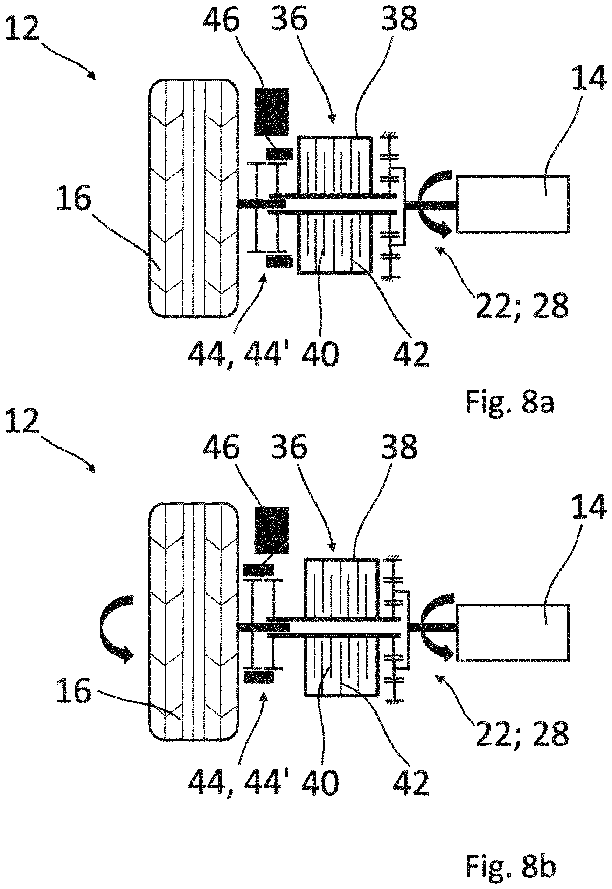

Neben den zuvor erläuterten Optionen 1 bis 3, welche in den Figuren 1 bis 6b gezeigt sind, wird im Nachfolgenden der Fahrzeugantriebsstrang 12 gemäß der vierten Option erläutert, der in den Figuren 7 bis 8b gezeigt ist.

Im Unterschied zu allen vorherigen Optionen ist bei der vierten Option die Kupplung 44 unmittelbar am angetriebenen Fahrzeugrad 16 vorgesehen, sodass ein Öffnen der Kupplung 44 ein Entkoppeln des Fahrzeugrads 16 vom gesamten Fahrzeugantriebsstrang inklusive der Lamellenbremse 36 mit sich zieht.

Abgesehen davon gelten die zuvor ausgeführten Erläuterungen zur ersten Option unter Ausschluss des Betriebs der Kupplung.

Im Unterschied zu den vorherigen Optionen muss bei dem Fahrzeugantriebsstrang 12 gemäß der vierten Option bei einem Bremsvorgang die Kupplung 44 geschlossen werden, sodass das angetriebene Fahrzeugrad 16 mit der zugeordneten Lamellenbremse 36 gekoppelt ist und eine Bremskraft von der Lamellenbremse 36 auf das angetriebene Fahrzeugrad 16 übertragbar ist.

Dementsprechend muss die Steuerung 48 bei der vierten Option den Aktuator 46 ansteuern, falls sich die Kupplung 44 im offenen Zustand befindet und ein Bremsvorgang eingeleitet werden soll.

Dieser Vorgang muss enorm schnell erfolgen, sodass es zu keinerlei zeitlicher Verzögerung kommt, wenn ein Bremsvorgang eingeleitet werden soll.

Ein automatisches Öffnen durch Ansteuern des Aktuators 46 über die Steuerung 48 könnte dann erfolgen, wenn sich das Fahrzeug in Segelbetrieb befindet und das angetriebene Fahrzeugrad 16 nicht durch Widerstände, wie beispielsweise Reibung im Fahrzeugantriebsstrang 12, abgebremst werden soll.

Bei den gezeigten Ausführungsformen ist zumindest eine angetriebene Fahrzeugachse vorgesehen ist und für jede angetriebene Fahrzeugachse ist eine einzige, eigene Kupplung vorgesehen, die so in den Antriebsstrang eingesetzt ist, dass mit ihr alle angetriebenen Räder dieser Fahrzeugachse vom Antrieb entkoppelt werden können. Dies ist z.B. durch die Anordnung der Kupplung vor dem Differential oder nach dem Differential und dabei in einem Teilstrang zwischen Differential und einem der beiden Antriebsräder möglich.

## Patentansprüche

1. Fahrzeugantriebsstrang eines Fahrzeugs (10) mit einem Motor (14), der dazu dient, zumindest ein Fahrzeugrad (16) anzutreiben, einer nur diesem angetriebenen Fahrzeugrad (16) zugeordneten Lamellenbremse (36) und einer nur diesem angetriebenen Fahrzeugrad (16) zugeordnete Kupplung (44; 44`),
wobei die Kupplung (44; 44`) zwischen dem Motor (14) und dem Fahrzeugrad (16) angeordnet ist und im offenen Zustand sein zugeordnetes Fahrzeugrad (16) vom gesamten restlichen Fahrzeugantriebsstrang entkoppelt.

2. Fahrzeugantriebsstrang nach Anspruch 1, **dadurch gekennzeichnet, dass** das Fahrzeugrad (16) zusammen mit der Lamellenbremse (36) und mit dem Teil des Fahrzeugantriebsstrangs, der sich zwischen Fahrzeugrad (16) und Kupplung (44; 44`) befindet, bei geöffneter Kupplung (44; 44`) vom gesamten restlichen Fahrzeugantriebsstrang entkoppelt ist.

3. Fahrzeugantriebsstrang nach Anspruch 1 oder 2, **dadurch gekennzeichnet, dass** zumindest eine angetriebene Fahrzeugachse vorgesehen ist und für jede angetriebene Fahrzeugachse eine einzige, eigene Kupplung vorgesehen ist.

4. Fahrzeugantriebsstrang nach einem der vorhergehenden Ansprüche, **dadurch gekennzeichnet, dass** die Kupplung (44; 44`) zwischen einem nur diesem Fahrzeugrad (16) oder nur einem einer Fahrzeugachse (18; 24) zugeordneten Getriebe (22; 28) und der Lamellenbremse (36), unmittelbar zwischen Fahrzeugrad (16) und der Lamellenbremse (36) oder unmittelbar zwischen dem Motor (14) und der Lamellenbremse (36) ohne Zwischenschaltung eines Getriebes angeordnet ist.

5. Fahrzeugantriebsstrang nach einem der Ansprüche 1 bis 3, **dadurch gekennzeichnet, dass** die Kupplung (44; 44`) zwischen dem Getriebe (28) und einer Kardanwelle (34) vorgesehen ist, oder zwischen dem Getriebe (22; 28) und einer Antriebswelle (20; 26) des angetriebenen Fahrzeugrads, oder in dem Getriebe (22; 28), oder an einer Antriebswelle (20; 26) des angetriebenen Fahrzeugrads oder in einer Radnabe des angetriebenen Fahrzeugrads.

6. Fahrzeugantriebsstrang nach einem der Ansprüche 1 bis 3, **dadurch gekennzeichnet, dass** die Kupplung (44; 44`) am oder im Getriebe (22; 28) vorgesehen ist und das Fahrzeugrad (16) mit der Lamellenbremse (36) und dem Teil des Fahrzeugantriebsstrangs vom Fahrzeugrad (16) bis zu dem Getriebe (22; 28) oder einem Teil eines Getriebes (22; 28), insbesondere einem Verteilergetriebe und/oder einem Differentialgetriebe, bei geöffneter Kupplung (44; 44`) vom gesamten restlichen Fahrzeugantriebsstrang entkoppelt ist.

7. Fahrzeugantriebsstrang nach einem der vorherigen Ansprüche, **dadurch gekennzeichnet, dass** das Fahrzeugrad (16) einer Fahrzeugachse (18; 24) zugeordnet ist, die ein Differenzial sowie ein zweites angetriebenes Fahrzeugrad (16) mit einer zweiten, nur dem zweiten Fahrzeugrad (16) zugeordneten Lamellenbremse (36) umfasst, und dass bei geöffneter Kupplung (44; 44`) das Differenzial durchdreht und keine Kraftübertragung zwischen dem Motor (14) und dem zweiten Fahrzeugrad (16) stattfinden kann.

8. Fahrzeugantriebsstrang nach einem der vorherigen Ansprüche, **dadurch gekennzeichnet, dass** die Kupplung (44; 44`) eine reibschlüssige und/oder formschlüssige Kupplung (44; 44`) ist.

9. Fahrzeugantriebsstrang nach einem der vorherigen Ansprüche, **dadurch gekennzeichnet, dass** die Kupplung (44; 44`) eine formschlüssige Kupplung ist, wobei in die formschlüssige Kupplung eine Rutschkupplung integriert ist, die bei Überschreitung eines definierten Drehmoments durchrutscht.

10. Fahrzeugantriebsstrang nach einem der vorherigen Ansprüche, **dadurch gekennzeichnet, dass** der Kupplung (44; 44`) ein Aktuator (46) zugeordnet ist, der zum Öffnen und/oder Schließen der Kupplung (44; 44`) dient und der die Kupplung (44; 44`) hydraulisch, pneumatisch, elektromechanisch oder elektromagnetisch betätigt.

11. Fahrzeugantriebsstrang nach Anspruch 10, **dadurch gekennzeichnet, dass** eine Steuerung (48) vorgesehen ist, die dazu eingerichtet ist, den Aktuator (46) anzusteuern und in Abhängigkeit vom Fahrzustand des Fahrzeugs (10) den Aktuator (46) steuert, um ein automatisches Öffnen und Schließen der Kupplung (44; 44`) zu veranlassen.

12. Fahrzeugantriebsstrang nach Anspruch 11, **dadurch gekennzeichnet, dass** die Steuerung (48) so programmiert ist, dass sie bei einem Bremsvorgang, insbesondere bei einem Bremsvorgang, bei dem nicht rekuperiert wird, und/oder bei einem Segeln des Fahrzeugs (10) ein Öffnen der Kupplung (44; 44`) veranlasst.

13. Fahrzeugantriebsstrang nach einem der vorherigen Ansprüche, **dadurch gekennzeichnet, dass** die Lamellenbremse (36) ein gekapseltes Lamellenbremsengehäuse (38) sowie Innenlamellen (40) und Außenlamellen (42) aufweist, die in dem gekapselten Lamellenbremsengehäuse (38) aufgenommen sind.

14. Fahrzeugantriebsstrang nach Anspruch 13, **dadurch gekennzeichnet, dass** die Lamellenbremse (36) ölgekühlt ist.
